(19) Europäisches Patentamt

European Patent Office

Office européen des brevets

(11) **EP 2 685 663 A1**

(12) **EUROPEAN PATENT APPLICATION**

(43) Date of publication:
**15.01.2014 Bulletin 2014/03**

(51) Int Cl.:
**H04L 12/14** *(2006.01)* **H04L 12/24** *(2006.01)*

(21) Application number: **12305839.8**

(22) Date of filing: **12.07.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Alcatel Lucent**
**75007 Paris (FR)**

(72) Inventors:
• **Pouyllau, Hélia**
**91620 NOZAY (FR)**
• **Ben Houidi, Zied**
**91620 NOZAY (FR)**

(74) Representative: **Hervouet, Sylvie et al**
**Feray Lenne Conseil**
**Le Centralis**
**63, avenue du Général Leclerc**
**92340 Bourg-la-Reine (FR)**

(54) **A method for evaluating a network configuration**

(57) A method, in a network management system, NMS, for evaluating a network configuration of a communication network, comprising: allowing a network administrator (9) to define (1) a network configuration; retrieving (2, 4, 6) parameters related to said network configuration; producing (7) a performance metric of said network configuration from said retrieved parameters; and displaying (8) said performance metric to the network administrator (9).

FIG.3

EP 2 685 663 A1

**Description**

**TECHNICAL FIELD**

The technical field is the one of communication network and particularly the one of evaluation of performance of a network configuration.

**BACKGROUND**

The Border Gateway Protocol (BGP) [RFC4271] allows exchanging reachability information among Autonomous Systems (ASs) and is known as the Internet routing protocol. Its role is to populate the routers routing information bases (RIB) with Inter-domain (Internet) routes so that each router in an AS is able to reach any destination IP prefix in the Internet. Each AS, through its BGP routers, discloses its own BGP routes to its neighboring ASs. An AS receives a route from its neighboring AS and propagates it to its other neighbors. A BGP route is a path vector containing: a destination network (IP prefix) to reach, an AS path, that is, the set of ASs to follow to reach said destination, a next hop router and a set of attributes that specify how the route should be treated by routers.

A router that receives two routes to the same destination applies a best path selection algorithm to select the best route. It installs said best route and propagates only best routes to its neighbors. The best route or path selection is done according to various criteria among which a lowest cost is the most important.

A problem arises when other contradictory constraints, such as delay, are also taken into account. It is the case if e.g. a delay-sensitive customer requires, and is ready to pay for, delay performances for its Internet data connection. This is contradictory because optimizing a network configuration in order to only reduce the cost may preclude from servicing a delay-sensitive connection that would provide increased revenues.

**SUMMARY**

The aim is to provide a method for evaluating a network configuration with respect to several and may be contradictory constraints such as costs and/or revenues and/or quality of service. The purpose is to help a network administrator when he/she manually configures said network.

An embodiment is directed to a method, in a network management system, NMS, for evaluating a network configuration of a communication network, comprising the steps of: allowing a network administrator to define a network configuration; retrieving parameters related to said network configuration; producing a performance metric of said network configuration from said retrieved parameters; and displaying said performance metric to the network administrator.

According to another feature, said retrieving step further comprises: retrieving routing parameters from the communication network based on the defined network configuration; analyzing said routing parameters to extract paths; building measurement requests from said extracted paths; and retrieving measure parameters, using said measurement requests.

According to another feature, a network configuration comprises at least one network node.

According to another feature, a performance metric of a network configuration is evaluated by a formula computing a sum of revenues provided by said network configuration minus a sum of costs incurred by said network configuration for all paths of said network configuration.

According to another feature, a cost of a network configuration is determined by a value of "local_pref" variable of autonomous systems crossed by the paths of said network configuration.

According to another feature, a revenue of a network configuration is determined by a difference between an ideal value and a measured value of a parameter indicative of performance of the network, times the amount of traffic, for all paths of said network configuration.

According to another feature, routing parameters comprise routing information bases, RIB, of all nodes pertaining to said network configuration.

According to another feature, measure parameters comprise revenue, bandwidth, delay or amount of traffic.

According to another feature, said displaying step is able to display said performance metric as a note, as a diagram or as a color label.

**BRIEF DESCRIPTION OF THE DRAWINGS**

Figure 1 and figure 2 illustrates a same illustrative network with two different network configurations.
Figure 3 shows a diagram of an embodiment of the evaluation process.

**DETAILED DESCRIPTION**

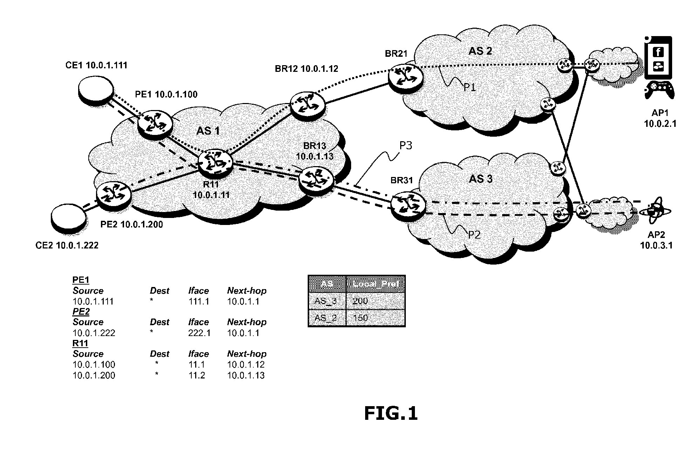

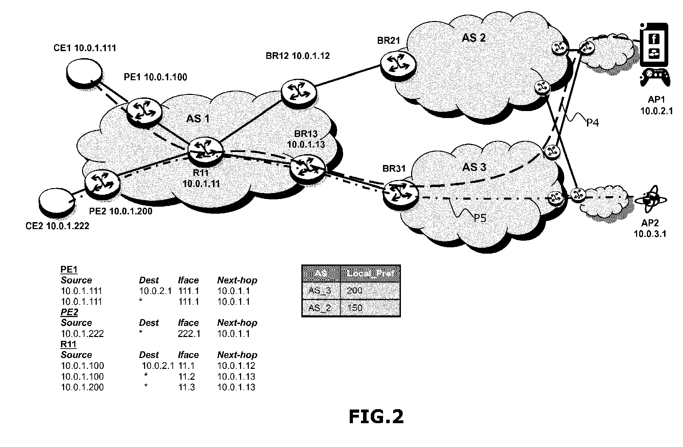

The detailed description will be given with respect to an illustrative communication network as illustrated in Figures 1 and 2.

Said communication network comprises three autonomous systems, ASs, namely AS 1, AS 2 and AS 3. The first autonomous system, AS1, is the network whose configuration is to be evaluated. From AS1, to reach a given node, such as an application node AP1, AP2, a path P1-P5 may goes through either AS 2 or AS 3. Let us consider for the purpose of the description, that AS 2 provides low delays but at a high cost, while instead AS 3 provides a high delay but at a low cost. The aim is a method for evaluating different possible configurations.

Said communication network comprises several nodes. Each such node comprises and is found in the communication network by a unique address. Said address is e.g. in the form of four number separated by points. Said address is figured after the name of the node. E.g. node R11, in AS 1 has an address of 10.0.1.11.

Depending on its particular function a node can receive different names. A customer edge, CE, is a node/router in charge of interconnecting customer equipment. Here figures 1 and 2 show two such customer edges CE1 and CE2, on the left of figures. Another kind of node is provider edge, PE. Such a node/router is particularized in that it connects a customer edge, CE, to an autonomous system, AS. E.g. PE1 is a provider edge connecting customer edge CE1 to the autonomous system AS 1. Another kind of node is border router, BR. Such a node/router is a router of an autonomous system, AS, that connects said autonomous system, AS, to other ASs. E.g. router BR12 is a border router of AS 1, connecting it to AS 2. BR21 is a border router of AS 2. Other nodes/routers, R, are internal routers. R11 is such an internal router, in said autonomous system AS 1.

Said communication network allows a customer at CE1, CE2 to connect to a remote application. AP1 is an example of a first application. AP2 is an example of a second application. AP1 is considered to be a delay sensitive application, while AP2 is considered to be a delay tolerant application.

So, CE1 is considered to be a delay sensitive customer in that it uses at least one delay sensitive application AP1. CE2 is considered to be a delay tolerant customer in that it does not use any delay sensitive application AP1, but only delay tolerant application such as AP2.

Let us consider that customer CE1 wants to connect to AP1, which is delay sensitive and AP2 which is delay tolerant. At the same time, customer CE1 wants to connect to AP2 which is delay tolerant.

To fulfill the requirement of both customers CE1 and CE2, several network configurations of AS 1 are possible. The aim of the evaluation method described here is to comparatively evaluate said different network configurations. Figure 1 shows a first example of a network configuration fulfilling the requirements of both customers CE1, CE2, while figure 2 shows a second example of such a network configuration.

In figure 1, requirements are fulfilled through three paths, P1, P2, and P3. P1, in dot line, connects CE1 to AP1. P2, in dash line, connects CE1 to AP2. P3, in axis line, connects CE2 to AP2.

In figure 2, requirements are fulfilled through two paths, P4 and P5. P4, in dash line, connects CE1 to AP1. P5, in axis line, connects CE2 to AP2.

The described method is intended to evaluate relatively these two network configurations. To do so, said method, is typically implemented in a network management system, NMS, and comprises several steps.

A first step is an allowing step allowing a network administrator 9 to define 1 a network configuration to be evaluated. The aim is to help said network administrator 9 in his job. Said network administrator 9 typically only does what cannot be automated.

Reverting back to the network configuration examples of figure 1 or figure 2, the network administrator 9, interacts with the method to define a configuration network to be evaluated. In the present case of figure 1 or 2, the network administrator 9 only defines a set of necessary nodes from the first autonomous system AS 1. Here, said set can be limited to nodes PE1, PE2 and R11. This set of nodes is sufficient in that the whole network configuration of figure 1 or 2 can be automatically retrieved from these nodes. This nodes from said set are defined, e.g. by their respective addresses, provided by the network administrator 9 to the method during said allowing step.

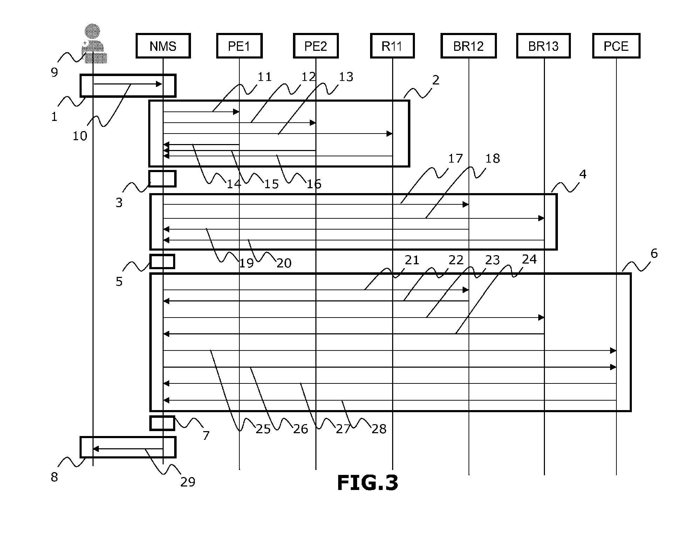

The process of said method for evaluating is figured in figure 3, figuring in time sequence the different operations realized by said method. On the top of the diagram are figured the different actors of said method including: a network administrator 9, a network management system, NMS, and the different nodes/routers: PE1, PE2, R11, BR12, BR13, PCE. PCE is meant here for path computation element, and is described later. Below are figured arrows. Each arrow 10-29 represents (at least) one message exchanged between the two actors located at its ends.

The box 1 figures the step of defining a configuration. Arrow 10 is representative of all the messages exchanged between the network administrator 9 and the method to define a network configuration.

A second step is a retrieving step able to retrieve 2 parameters related to said network configuration, based on the network configuration defined in previous step 1. Said retrieving step is further detailed later.

The principle is then that the network administrator 9 defines a network configuration to be evaluated by providing the minimum information about said network configuration. Based on the information provided, the method completes itself its information about said network configuration by collecting parameters, through communication network interrogation and measurement, as will be detailed later.

When all the necessary parameters and measurements are so gathered by the method, a third step, computes 7 from said parameters and measurements, a performance metric of said network configuration to be evaluated. This is figured by block 7 in figure 3.

Once said performance metric 29 is computed, a fourth step, may display 8 said performance metric 29 back to the network administrator 9, that initially requested it.

The method can be repeated, by the network administrator 9, providing information for each network configuration to be evaluated, and receiving in return a performance metric for each network configuration thus computed 7 by said method. The network administrator 9 can thus compare several network configurations, by their relative merits, as indicated by their respective performance metrics.

The retrieving step can be parted into further detailed sub steps. This is better described with respect to figure 3 where said retrieving step is figured by the operation of blocks 2 to 7.

A first sub step can be a routing retrieving step able to retrieve 2 routing parameters. Said routing parameters are retrieved by asking the communication network and especially, based on the defined network configuration. Since for both example network configurations of figure 1 and 2, some nodes PE1, PE2 and R11, have been defined in said defining module said nodes PE1, PE2 and R11 are requested to provide routing parameters. Said routing parameters may e.g. be their respective routing information base, RIB. Each router comprises such a RIB. The form of a RIB depends on the network protocol used, but it always comprises definition of paths routing from said router. It is thus indicative of the routing configuration of each said router PE, PE2, R11. RIB may e.g. be retrieved by different commands, such as SNMP, NetConf, etc.

In both figures 1 and 2, the respective RIB of each of said routers PE1, PE2 and R11 are indicated in a table at bottom left of each figure. Here a RIB is defined by records arranged in lines, one line per path, each record comprising four fields: a source field indicating the source of said path, a destination field indicating the destination of said path, an interface field, and a next-hop field.

The RIB of PE1 in configuration 1 at figure 1 e.g. comprises one path. This path starts in source address 10.0.1.111, that is, in CE1, and ends in generic destination address *, that is, multiple possible destinations. The next-hop to go there has an address 10.0.1.1, that is, in R11. This path corresponds to and partly defines both path P1 and path P2.

The RIB of PE1 in configuration 2 at figure 2 e.g. comprises two paths. The first path starts in source address 10.0.1.111, that is, in CE1, and ends in destination address 10.0.2.1, that is, in AP1. The next-hop to go there has an address 10.0.1.1, that is, in R11. This path corresponds to and partly defines path P4. The second path starts in source address 10.0.1.111, that is, in CE1, and ends in generic destination address *, that is, multiple possible destinations. The next-hop to go there has an address 10.0.1.1, that is, in R11. This path corresponds to and partly defines path P5.

With reference to figure 3, messages 11, 12 and 13 respectively request RIB from PE1, PE2 and R11 respectively. Each of said nodes answers by providing its RIB, as figured by messages 14, 15 and 16 respectively.

Upon receiving said routing information in the form of the RIBs of initially defined routers PE1, PE2, R11, said retrieving step feeds said routing information into an analyzing step in order to analyze it 3. Said analysis 3 step studies said RIBs in order to extract paths P1-P5 and next-hop routers, until border routers are reached. Here, in the examples, two such border routers can be found by following the paths as indicated by the RIB. These borders routers are BR12 and BR13.

Following the discovery of said new routers, not initially defined by the network operator 9, a new routing retrieving step is accomplished. This appears in block 4 in figure 3. Messages 17 and 18 respectively request the RIB from nodes BR12 and BR13 respectively. Each of said nodes answers by providing its RIB, as figured by messages 19 and 20 respectively.

Such a routing information retrieving step may be iteratively reproduced as long as new routers are found. In the examples, all routers have been found, since BR12 and BR13, as border routers, are the last routers pertaining to the first autonomous system AS 1. So the network topological exploration ends.

All so gathered routing information, RIBs of all routers PE1, PE2, R11, BR12, BR13, are feed into another sub step. Said building sub step is in charge of analyzing 5 all these routing information in order to determine which measurements are needed in order for the producing step to be able to compute 7 a performance metric.

To do so, said building step analyses 5 all the topological information of the paths available from said routing information previously gathered, in order to determine which performance measurements are useful to compute 7 the performance metric. For each such useful measurement determined by the analysis 5, said building step builds a measurement request.

All said built measurement requests are then feed into a measure retrieving step. Said measure retrieving step executes 6 each of said built measurement requests to retrieve the values of respective measure parameters.

Depending on the type of measurement to retrieve, the built request may differ. Measurements concern parameters influencing performances.

A parameter may be either static or dynamic. A static parameter is typically a value stored in any one of the nodes. The measurement request to retrieve such a static value is a direct request to said node.

A dynamic parameter is typically a value depending on the load of the network. It has thus to be measured each time it is determined.

An example of a static parameter is e.g. an amount charged by an AS to carry a given traffic. This may also be considered as a cost to use said AS. The measurement request is this case is a request directed to e.g. one of the border routers of said AS. Said amount charged, or cost, may be inversely expressed in BGP through a "local_pref" parameter. Such a "local_pref" parameter is indicated, for both examples of figures 1 and 2 in a table located at the bottom center of the figure.

The second autonomous system AS 2, which exhibits a higher cost, is credited of a lesser "local_pref" value of 150, while instead, the third autonomous system AS 3, which exhibits a lower cost, is credited of a higher "local_pref" value of 200.

An example of a dynamic parameter is a bandwidth available or a delay experienced between any two nodes. Since such a parameter's value changes versus time as a function of the network load, it has to be measured, each time it is needed.

To illustrate this point, two examples are given. The delay experienced over a given path can be determined by a measurement realized over said path. Depending on the location of the considered path, a measurement request can be either directly send from the NMS or most often a message can be send to a given router, generally an initial router located at the first end of said path, asking said initial router to apply a given measurement command.

With reference to figure 3, message 21, is a request from the measure retrieving step to router BR12. It comprises e.g. a SSH command comprising an order for the router BR12 to apply a delay measurement command, e.g. a Ping command, toward a given address, here 10.0.2.1, that is, the address of AP1. Said message 21 is built to ask router BR12 to provide the current delay from BR12 toward AP1. Router BR12 applies said measurement command and determines said delay. Message 22, sent by BR12 back to NMS, comprises the result of said measurement, e.g. 60 ms.

Similarly message 23, is a request from the measure retrieving step to router BR13. It comprises e.g. a SSH command comprising an order for the router BR12 to apply a delay measurement command, e.g. a Ping command, toward a given address, here 10.0.3.1, that is, the address of AP2. Router BR13 applies said measurement command, determines said delay, and sends back to NMS, through message 24, the result of said measurement, e.g. 110 ms.

To retrieve a delay another way is to use a path computation element, PCE, as defined in [RFC 5440]. This is illustrated in figure 3, where message 25, respectively 26, comprises a PCreq command with a keyword "delay" and an argument R11-BR12 (e.g. as Include Route Objects), respectively a PCreq command with a keyword "delay" and an argument R11-BR13. The PCE service receives said commands and processes them, by executing of have some other node executing corresponding measures. It first determines a delay of e.g. 20ms for the R11-BR12 path and a delay of e.g. 50ms for the R11-BR13 path. These both results are sent back to NMS respectively through message 27 and message 28.

At this point the method is in possession of all the measurements needed to compute 7 a performance metric. Said performance metric may then be computed 7 during a computing step. According to a preferred embodiment, said computation 7 step may be done through the use of a formula computing a sum of revenues provided by said network configuration minus a sum of costs incurred by said network configuration.

Said formula may e.g. be expressed by:

$$\sum_{CE} \mathrm{Re}venue(CE) - \sum_{AS} \sum_{CE} Cost(AS) * Traffic(CE)$$

where Revenue(CE) is a revenue provided by the paths from a given user or CE and are summed by said CEs, where Cost(AS) is the cost of using said AS, that is the amount charged by said AS to carry a given traffic, and Traffic(CE) is the traffic linked to a given user or CE that crosses said AS, the products Cost(AS)*Traffic(CE) are summed by said CEs and said ASs.

Said formula is only intended to be an illustrative sample, and a network administrator 9 may amend said formula as he/she sees fit.

Said formula may e.g. also be expressed by:

$$\sum_{paths} Local\_\mathrm{Pr}ef * bandwidth / path + \sum_{metric} \sum_{destination} (ideal\_metric\_value - measured\_metric\_value) * bandwidth / path$$

where local_pref is used here as an indicator of the cost of using a given AS, where bandwidth/path is the available bandwidth on said path, where ideal_metric_value is an expected value for each evaluated metric, and where measured_metric_value is a measured value for each evaluated metric.

With reference to the two examples, said performance metric may be evaluated the following way. Let us consider that 100 ms is an ideal value for the total delay of a delay sensitive application and 200 ms is an ideal value for the total delay of a delay tolerant application. Let us consider that both users CE1 and CE2 have each a 1Gb connection, and that CE1 spends half of it for delay-sensitive application.

As seen before, the measurement process has measured a delay of 20 ms from PE1 or PE2 to BR12, 50 ms from PE1 or PE2 to BR13, 60 ms from BR12 or BR13 to AP1 and 110 ms from BR12 or BR13 to AP2. As seen before, the "local_pref" value of AS 2 is 150 and the "local_pref" value of AS 3 is 200.

The first network configuration, corresponding to figure 1, comprises three paths P1-P3. The first path P1 has a throughput of 0.5 Gb. It travels through AS 2, thus providing a revenue of 0.5*150. It is delay-sensitive and travels through CE1-BR12 and BR12-AP1. It thus costs 0.5*(100-20-60). The second path P2 has a throughput of 0.5 Gb. It travels through AS 3, thus providing a revenue of 0.5*200. It is delay-tolerant and travels through CE1-BR13 and BR13-AP2. It thus costs 0.5*(200-50-110). The third path P3 has a throughput of 1 Gb. It travels through AS 3, thus providing a revenue of 1*200. It is delay-tolerant and travels through CE2-BR13 and BR13-AP2. It thus costs 1*(200-50-110).

The performance metric for the first network configuration is then: 0.5*150 + 0.5*(100-20-60) + 0.5*200 + 0.5*(200-50-110) + 1*200 + 1*(200-50-110) = 0.5*150 +1.5*200 + 0.5*20 +1.5*40 = 75+300+10+60, and is equal to 445.

The second network configuration, corresponding to figure 2, comprises two paths P4-P5. The first path P4 has a throughput of 1 Gb. It travels through AS 3, thus providing a revenue of 1*200. It is delay-sensitive and travels through CE1-BR13 and BR13-AP1. It thus costs 1*(100-110-60). The second path P5 has a throughput of 1 Gb. It travels through AS 3, thus providing a revenue of 1*200. It is delay-tolerant and travels through CE2-BR13 and BR13-AP2. It thus costs 1*(200-50-110).

The performance metric for the second network configuration is then: 1*200 + 1*(100-110-60) + 1*200 + 1*(200-50-110) = 2*200 - 50 + 40, and is equal to 390.

According to said relative performance metrics/notes, the first network configuration, obtaining the best note, could be preferred.

As previously described, for each so evaluated network configuration, a note qualifying said network configuration is obtained. Said notes may be displayed 8 as such, in numerical form. Since the goal is to compare the relative merits of several network configurations, said corresponding notes may advantageously be displayed 8 comparatively e.g. on a comparative diagram. For this purpose the notes so obtained may be previously normalized, as long as they can be compared. Any other way of displaying 8 said performance metric(s) can be used. E.g. each performance metric can be displayed using a color label reflecting e.g. a good/medium/bad performance metric, figured by e.g. three colors, e.g. respectively green/orange/red.

**Claims**

1. A method, in a network management system, NMS, for evaluating a network configuration of a communication network, *characterized in that it* comprises the steps of:

   - allowing a network administrator (9) to define (1) a network configuration;
   - retrieving (2, 4, 6) parameters related to said network configuration;
   - producing (7) a performance metric of said network configuration from said retrieved parameters; and
   - displaying (8) said performance metric to the network administrator (9).

2. The method of claim 1, wherein said retrieving step further comprises:

   - retrieving (2, 4) routing parameters from the communication network based on the defined network configuration;
   - analyzing (3, 5) said routing parameters to extract paths (P1-P5);
   - building (3, 5) measurement requests from said extracted paths (P1-P5); and
   - retrieving (6) measure parameters, using said measurement requests.

3. The method of any one of claims 1 or 2, wherein a network configuration comprises at least one network node (PE1, PE2, R11, BR12, BR13).

4. The method of any one of claims 1 to 3, wherein a performance metric of a network configuration is evaluated by a formula computing a sum of revenues provided by said network configuration minus a sum of costs  incurred by said network configuration, for all paths (P1-P5) of said network configuration.

5. The method of claim 4, wherein a cost of a network configuration is determined by a value of "local_pref" variable of autonomous systems (AS 2, AS 3) crossed by the paths (P1-P5) of said network configuration.

6. The method of any one of claims 4 or 5, wherein a revenue of a network configuration is determined by a difference between an ideal value and a measured value of a parameter indicative of performance of the network, times the amount of traffic, for all paths (P1-P5) of said network configuration.

7. The method of any one of claims 2 to 6, wherein routing parameters comprise routing information bases, RIB, of all nodes (PE1, PE2, R11, R12, R13) pertaining to said network configuration.

8. The method of any one of claims 2 to 7, wherein measure parameters comprise revenue, bandwidth, delay or amount of traffic.

9. The method of any one of claims 1 to 8, wherein said displaying step is able to display (8) said performance metric as a note, as a diagram or as a color label.

CE1 10.0.1.111

PE1 10.0.1.100

BR12 10.0.1.12

BR21

AS 2

P1

AP1
10.0.2.1

AS 1

BR13
10.0.1.13

P3

R11
10.0.1.11

BR31

AS 3

PE2 10.0.1.200

CE2 10.0.1.222

P2

AP2
10.0.3.1

| PE1 | | | |
|---|---|---|---|
| *Source* | *Dest* | *Iface* | *Next-hop* |
| 10.0.1.111 | * | 111.1 | 10.0.1.1 |
| *PE2* | | | |
| *Source* | *Dest* | *Iface* | *Next-hop* |
| 10.0.1.222 | * | 222.1 | 10.0.1.1 |
| R11 | | | |
| *Source* | *Dest* | *Iface* | *Next-hop* |
| 10.0.1.100 | * | 11.1 | 10.0.1.12 |
| 10.0.1.200 | * | 11.2 | 10.0.1.13 |

| AS | Local_Pref |
|---|---|
| AS_3 | 200 |
| AS_2 | 150 |

## FIG.1

CE1 10.0.1.111
PE1 10.0.1.100
BR12 10.0.1.12
BR21
AS 2
AS 1
BR13
10.0.1.13
R11
10.0.1.11
BR31
AS 3
PE2 10.0.1.200
CE2 10.0.1.222
AP1
10.0.2.1
P4
AP2
10.0.3.1
P5

PE1

| Source | Dest | Iface | Next-hop |
|---|---|---|---|
| 10.0.1.111 | 10.0.2.1 | 111.1 | 10.0.1.1 |
| 10.0.1.111 | * | 111.1 | 10.0.1.1 |

PE2

| Source | Dest | Iface | Next-hop |
|---|---|---|---|
| 10.0.1.222 | * | 222.1 | 10.0.1.1 |

R11

| Source | Dest | Iface | Next-hop |
|---|---|---|---|
| 10.0.1.100 | 10.0.2.1 | 11.1 | 10.0.1.12 |
| 10.0.1.100 | * | 11.2 | 10.0.1.13 |
| 10.0.1.200 | * | 11.3 | 10.0.1.13 |

| AS | Local_Pref |
|---|---|
| AS_3 | 200 |
| AS_2 | 150 |

# FIG.2

**FIG.3**

Europäisches
Patentamt

European
Patent Office

Office européen
des brevets

**EUROPEAN SEARCH REPORT**

Application Number

EP 12 30 5839

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 97/18658 A1 (LORAN NETWORK SYSTEMS LLC [US]; DAWES NICHOLAS [CA]) 22 May 1997 (1997-05-22) * page 2, line 1 - line 16 * ----- | 1-9 | INV. H04L12/14 H04L12/24 |
| X | WO 98/58474 A1 (ERICSSON TELEFON AB L M [SE]) 23 December 1998 (1998-12-23) * the whole document * ----- | 1-9 | |
| A | EP 2 254 277 A1 (ACCENTURE GLOBAL SERVICES GMBH [CH]) 24 November 2010 (2010-11-24) * paragraphs [0066], [0070], [0074] * ----- | 1-9 | |
| A | EP 1 571 780 A1 (GEN DYNAMICS C4 SYSTEMS INC [US]) 7 September 2005 (2005-09-07) * abstract * * paragraph [0011] - paragraph [0012] * ----- | 1-9 | |

TECHNICAL FIELDS
SEARCHED (IPC)

H04L

The present search report has been drawn up for all claims

| Place of search | Date of completion of the search | Examiner |
|---|---|---|
| Berlin | 15 October 2012 | Siebel, Christian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

**ANNEX TO THE EUROPEAN SEARCH REPORT
ON EUROPEAN PATENT APPLICATION NO.**

EP 12 30 5839

This annex lists the patent family members relating to the patent documents cited in the above-mentioned European search report.
The members are as contained in the European Patent Office EDP file on
The European Patent Office is in no way liable for these particulars which are merely given for the purpose of information.

15-10-2012

| Patent document cited in search report | | Publication date | Patent family member(s) | | | Publication date |
|---|---|---|---|---|---|---|
| WO 9718658 | A1 | 22-05-1997 | AU | 7557996 | A | 05-06-1997 |
| | | | CA | 2190426 | A1 | 17-05-1997 |
| | | | EP | 0861545 | A1 | 02-09-1998 |
| | | | EP | 1211845 | A2 | 05-06-2002 |
| | | | EP | 1211846 | A2 | 05-06-2002 |
| | | | EP | 1211847 | A2 | 05-06-2002 |
| | | | US | 5926462 | A | 20-07-1999 |
| | | | US | 5933416 | A | 03-08-1999 |
| | | | WO | 9718658 | A1 | 22-05-1997 |
| WO 9858474 | A1 | 23-12-1998 | AU | 8050398 | A | 04-01-1999 |
| | | | US | 6134589 | A | 17-10-2000 |
| | | | WO | 9858474 | A1 | 23-12-1998 |
| EP 2254277 | A1 | 24-11-2010 | CA | 2701240 | A1 | 20-11-2010 |
| | | | CN | 101895413 | A | 24-11-2010 |
| | | | EP | 2254277 | A1 | 24-11-2010 |
| | | | US | 2010296397 | A1 | 25-11-2010 |
| EP 1571780 | A1 | 07-09-2005 | AU | 2005201005 | A1 | 22-09-2005 |
| | | | CA | 2499334 | A1 | 05-09-2005 |
| | | | EP | 1571780 | A1 | 07-09-2005 |
| | | | US | 2005195749 | A1 | 08-09-2005 |
| | | | US | 2009028064 | A1 | 29-01-2009 |

EPO FORM P0459

For more details about this annex : see Official Journal of the European Patent Office, No. 12/82